# EUROPEAN PATENT APPLICATION

(11) **EP 0 616 380 A1**
(43) Date of publication of application: **21.09.1994**
(21) Application number: 93200762.8
(22) Date of filing: 16.03.1993
(51) Int. Cl.: H01M 8/02

(54) **A gas distributor for fused carbonates-fuel cells**

(71) Applicant: FINMECCANICA S.p.A. AZIENDA ANSALDO, I-16128 Genova (IT)
(72) Inventor: Zappaterra, Maurizio, I-16153 Genova (IT)
(74) Representative: Maggioni, Claudio

(57) **Abstract**

A gas distributor (5a,5b) for fused carbonates-fuel cells has a plurality of conduits (9) juxtaposed to one of the cell flat electrodes (3,6); said conduits comprise two longitudinally aligned conduit portions (9e,9b), of which one has a cross-section open towards the electrode.
In addition, two conduits laying side by side in the distributor, have their respective open cross-section portions coincident respectively with the first and second portions of their longitudinal extent.

## Description

This invention relates to a gas distributor for fused carbonates-fuel cells comprising an electrolitic matrix inserted between two flat electrodes, the distributor being provided with a plurality of gas flow conduits juxtaposed to one of said electrodes.

Fused carbonates-fuel cells are well known in the scientific and research environments, either as subject-matter of many publications, either as object of patent specifications.

These cells, which are basically electrochemical batteries, include a porous electrolitic matrix containing alkaline metals carbonates; the matrix is inserted between a pair of flat electrodes, and gases which interact chemically with the carbonates present in the matrix are flowed on the surface of this latter. Electric power is generated from the chemical reactions which take place between the gas and the electrolitic matrix.

The ideal working condition for these cells, as required for satisfactory operation of same, is achieved when the gases are conveyed over the matrix surface in such a manner that they can be distributed all at once and uniformly on the surface.

The cells are usually employed in packages for convenient electrical interconnection of the cells in series to provide a range of voltages that may suit different application conditions; this packaged arrangement, however, does not comply with the formation of gas flow channels for conducting the gases simultaneously and uniformly on the matrix surface.

It has been common practice, therefore, to provide channels laid parallel to the surfaces to be lapped and oriented in such a manner that the flow directions of the gases to the cathode and the anode are perpendicular to each other.

Specifically, distributors for fused carbonates-fuel cells are known, which have a set of channels, for conveying gases, extending parallel to one another and longitudinally being made up of queued channel portions; these portions have predetermined length and U-shaped cross-section, alternately inverted one with respect to the other. Thus, an alternate succession is obtained wherein a U-shaped channel portion which is open at the top will be followed by an inverted upside down portion, open at the bottom towards the matrix but having a closed top.

In this way, a gas admitted into these channels will only contact the matrix along the open-bottom channel portions.

This type of solution has been adopted in order to distribute the gas as evenly as possible all over the matrix face where the distribution occurs.

The above-described distributor however, is not able to fulfil this requirement.

In fact, as mentioned above, the gas reaches the matrix surface at the open-bottom portions entered in succession; along its path of flow, the gas will react more in the channel portions which lie closest to the gas inlet in the distributor, and less in the portions located farthest therefrom. This happens because the gas, in flowing along its path, becomes progressively poor of those components which react chemically with the matrix itself; in other words, a concentration gradient of such components is generated, thereby the distribution of the areas where the chemical reaction of the electrolithic matrix with the gases occurs, becomes uneven.

This unbalanced distribution originates, because of the strongly exothermic reactions occurring between the gas and the carbonates, high thermal gradients within the matrix which damage the integrity and the operation of the cell. As to this last aspect, it should not be overlooked that the gas distributor also serves as an electric current commutator, therefore to an uneven distribution of the chemical reactions corresponds an uneven electric current density, and a bad operation of the cell with low efficiency standards.

The technical problem underlying this invention is to provide a gas distributor for fused carbonates-fuel cells, which has such construction and performance features as to overcome the aforementioned drawbacks with which the prior art is beset; that is, a distributor that can spread the gases as to provide a well balanced distribution effective to promote uniformity of the electrochemical reactions that take place between the gases and the matrix.

This problem is solved by a distributor as above indicated, being characterized in that each longitudinal conduit is longitudinally composed of two portions having respectively closed and open cross-section towards said electrode, and that in said plurality of conduits, two conduits laying side by side have their respective open cross-section portions laid adjacent to the respective portions having a closed cross-section.

Further features and the advantages of this invention will become more clearly apparent from the following description of an embodiment thereof, given by way of example and not of limitation with reference to the accompanying drawings, in which:
Figure 1 is a perspective view of a plurality of cells according to the invention;

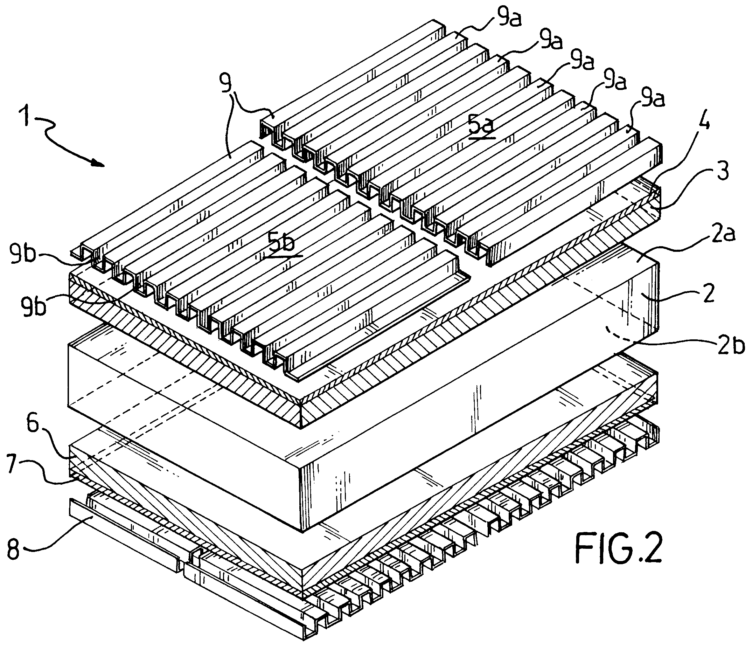

Figure 2 is a perspective view, with detached parts, of one of the cells in Figure 1.

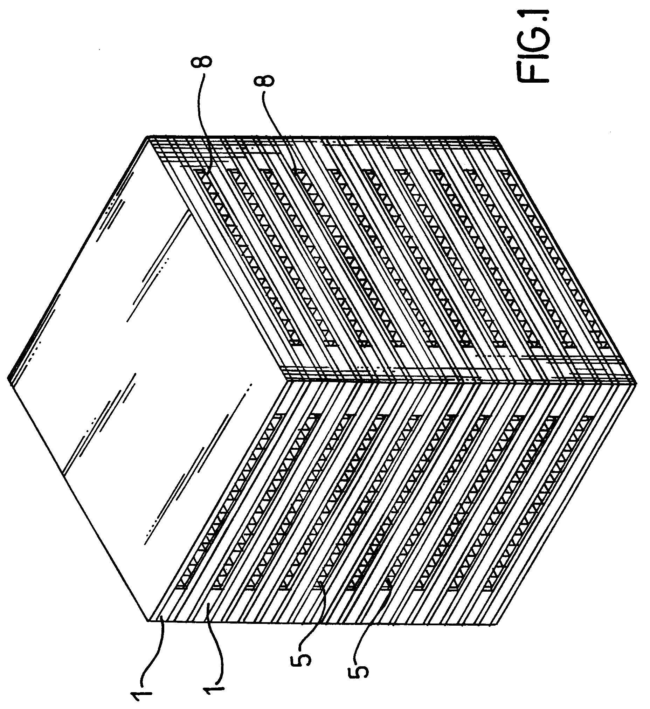

With reference to the drawing views, and specifically to Figure 1, shown therein are a plurality of cells 1 according to the invention packed together. Each of these cells comprises a porous matrix 2, having shape of a flattened parallelepiped, housing inside an electrolyte made of fused carbonates of alkaline metals.

At a first face 2a of the matrix 2, there are provided in a layered arrangement, a flat anode 3, a first metallic net 4, and a first gas distributor 5; likewise, at a second face 2b juxtaposed to the first, there are provided a flat cathode 6, a second metallic net 7, and a second distributor 8.

The anode 3 and cathode 6 are made of a porous metal material to allow gases to flow therethrough, as will be explained hereinafter.

The first and second distributors 5 and 8 are identical, and accordingly, only the fatures and operation of the first will be described herein; therefore, the structural elements of the second have not been referenced in the drawings by respective numerals.

The distributor 5 comprises a first portion 5a and second portion 5b consisting, in this embodiment, of respective pieces of crenellated sheet metal. Each of these portions includes a plurality of conduit portions 9a and 9b, respectively, which are laid side by side; said conduit portions 9a and 9b have a U-shaped cross-section and are defined by the ribs of the crenellated sheets. Additionally, the sheets are laid one after the other so that their respective conduit portions 9a and 9b are aligned in succession.

In particular, the two pieces of crenellated sheet metal have the same profile and are turned upside down one each other, whereby the aligned conduit portions 9a and 9b have an inverted-U shape cross section, with respect to one another.

Any two aligned conduit portions 9a and 9b form portions of a single conduit 9. In the distributor 5, each conduit 9 lays side by side with similar conduits in which the portions 9a and 9b have the U-shaped cross-sections alternately inverted from each other and are such that two side by side conduits will have the cross-sections of their respective portions with the same orientations, respectively coincident with the first and second portions of their longitudinal extent.

Further, in this embodiment of the invention, the two portions 5a and 5b of the distributor 5 completely cover the face 2a of the matrix 2 and have the same longitudinal extent.

As it concerns the invention operation, in the cell of this invention the gas distribution is of the cross-flow type, and accordingly, the conduits 9 of the first distributor 5 have longitudinal extent perpendicular to the one of the corresponding conduits in the second distributor 8.

For generating electric power with a cell according to the invention, the gases which have to react with the carbonates contained inside the matrix are directed into the first and the second distributor. Omitted from this specification is how the gases are introduced, because unimportant for the purpose of illustrating the invention.

The gases will flow through the conduit portions 9a of the first portion 5a of the distributor 5; along those conduit portions which are open towards the metallic net, they will flow through the anode 3 and reach the matrix, but have no contact with it along the other portions.

As the gases flow through the second portion 5b of the distributor 5, they meet the portions 9b of the conduits 9 whose cross-sectional shape is reversed with respect to that of the conduit portions just passed.

This means that those gases which had been flowed through a conduit portion open towards the metallic net will now meet a closed portion towards the same side; vice versa happens with those conduits which were initially closed towards the metallic net.

Thus, those gases which reacted with the matrix 2 in the first portion of the distributor 5, do not react any more in the second portion thereof; vice versa occurs to those gases which, in the first portion, did not lap the matrix, and maintained their chemical-physical characteristics unaltered while passing through the first portion.

It will be appreciated, therefore, that the gas distributor of this invention can provide a balanced distribution of the gas flow across the matrix surface, with all the benefits which are consequent to this.

In particular, the distributor split into two portions such that each conduit 9 passed through by the gases will present two portions alternately closed or open towards the metallic net, allows to bring in contact with the areas of the matrix farthest from the distributor inlet, gases provided with optimum conditions for reacting with the matrix.

It should be also noted that the alternation in each distributor portion of side by side conduit portions which are open and closed, respectively, towards the net, enables a corresponding alternation to be provided on the matrix surface of regions concerned by the chemical reaction and regions which do not interact with the gases.

The heat released from the chemical reactions which occur in the concerned regions is transferred to those unaffected by such reactions, to thereby provide a distribution of temperatures which will never reach excessively high levels either on the matrix surface and in the metallic net.

Additionally, the importance of the metallic net between the electrodes 3 and 6 and the corresponding distributors 5 and 8 should be emphasized.

In fact, when the cells are stacked one upon another (see Figure 1), the heat from the reactions which take place on the underlying face of a matrix in each cell, after a certain period of operation leads the material of which the corresponding electrode is formed, pasty; consequently to this, the electrode material tends to drip down and block the conduits of the underlying distributor.

The metal net, being placed between the distributor and the electrode, will support the electrode material and prevent it from dripping down; instead of the metal net, a thin sheet of metal suitably perforated all over its surface could be used.

Another advantage of this invention over the prior art is that the constructional simplicity afforded by a distributor which is formed of two pieces of crenellated sheet metal turned upside down one to another, can speed up and facilitate the manufacture thereof at greatly reduced cost.

Further, the crenellated sheets can be easily produced with different ribs and cross-sections, making them suitable for fitting the different sizes of of the cells to be manufactured.

Notice in this respect that the crenellated sheets may be provided, additionally to a plurality of ribs defining side-by-side conduits portions having a U-shape cross-section, also with ribs defining conduit portions having a trapezoidal cross-section.

Last, notice that the distributor of this invention fully achieves the function of electric current commutator as well, because of the very good contact which is established between the flat parts of the crenellated sheets and the metallic net connected electrically to the electrodes.

## Claims

1. A gas distributor for fused carbonates-fuel cells comprising an electrolitic matrix (2) inserted between two flat electrodes (3,6), the distributor being provided with a plurality of gas flow conduits (9) juxtaposed to one of said electrodes (3,6), characterized in that each conduit (9) is composed longitudinally of two portions (9a,9b) having respectively closed and open cross-section towards said electrode (3,6), and that in said plurality of conduits (9) two conduits laying side by side have their respective open cross-section portions (9a,9b) laid adjacent to the respective portions having a closed cross-section.

2. A distributor according to Claim 1, characterized in that it comprises a metallic net (4,7) inserted between the conduits (9) and the electrode (3,6).

3. A distributor according to Claim 2, characterized in that said conduits (9) are formed by aligning together two pieces of crenellated sheet metal having the same profile, one after another with one piece being turned upside down with respect to the other, and by aligning their respective ribs in the longitudinal direction.

4. A distributor according to Claim 3, characterized in that said portions (9a,9b) of the conduits (9) have a rectangular cross-section open at a long side thereof.

5. A distributor according to Claim 3, characterized in that said portions (9a,9b) of the conduits (9) have a trapezoidal cross-section open at the longer parallel side thereof.
